# EUROPÄISCHE PATENTSCHRIFT

(11) **EP 1 501 901 B1**
(45) Veröffentlichungstag und Bekanntmachung des Hinweises auf die Patenterteilung: **01.03.2006**
(21) Anmeldenummer: 03747102.6
(22) Anmeldetag: 15.04.2003
(51) Int. Cl.: C09D 11/00, C08G 83/00

(54) **AUFZEICHNUNGSFLÜSSIGKEITEN, ENTHALTEND POLYURETHANE MIT HYPERVERZWEIGTEN STRUKTUREN**
RECORDING LIQUIDS CONTAINING POLYURETHANES WITH HYPERBRANCHED STRUCTURES
LIQUIDES D'IMPRESSION CONTENANT DES POLYURETHANNES A STRUCTURES HYPERRAMIFIEES

(30) Priorität: 23.04.2002 DE 10218163
(43) Veröffentlichungstag der Anmeldung: 02.02.2005
(60) Teilanmeldung: 05024162.9
(73) Patentinhaber: BASF Aktiengesellschaft, 67056 Ludwigshafen (DE)
(72) Erfinder: BRUCHMANN, Bernd, 67251 Freinsheim (DE); KRÜGER, Christian, 55291 Saulheim (DE); HEES, Ulrike, 68167 Mannheim (DE)
(86) Internationale Anmeldenummer: PCT/EP2003/003899
(87) Internationale Veröffentlichungsnummer: WO 2003/091347

(56) Entgegenhaltungen:
- EP-A- 1 167 413
- WO-A-00/59978
- WO-A-01/58987
- DE-A- 19 840 605
- US-A- 5 981 684
- US-A1- 2001 005 738
- US-B1- 6 258 896

## Beschreibung

Die vorliegende Erfindung betrifftAufzeichnungsflüssigkeiten, insbesondere Tinten, enthaltend Polyurethane mit hyperverzweigten Strukturen, ausgewählt aus
hyperverzweigten Polyurethanen
und modifizierten hyperverzweigten Polyurethanen.

Speziell betrifft die vorliegende Erfindung Aufzeichnungsflüssigkeiten, dadurch gekennzeichnet, dass das modifizierte hyperverzweigte Polyurethan erhältlich ist durch Umsetzung von einem oder mehreren hyperverzweigten Polyurethanen mit einem oder mehreren Polymeren der allgemeinen Formel I

U-(M)_{y}-T I

wobei die Variablen wie folgt definiert sind:
- U: ausgewählt aus Wasserstoff, C₁-C₁₈-Alkyl, C₇-C₁₃-Aralkyl, C₆-C₁₄-Aryl, oder einem Rest aus einem Radikalstartermolekül,
- M: gleiche oder verschiedene Monomereinheiten;
- y: ist eine ganze Zahl von 10 bis 100.000;
- T: funktionelle Gruppen, die mit den NCO-Gruppen oder OH-Gruppen von hyperverzweigten Polyurethanen zu modifizierten hyperverzweigten Polyurethanen reagieren.

Dispergieradditive sind in zahlreichen Anwendungen, in denen Pigmente dauerhaft auf Oberflächen fixiert werden sollen, von großer technischer und wirtschaftlicher Bedeutung. Dabei müssen sie einerseits den üblicherweise hohen technischen Anforderungen genügen, andererseits müssen sie zu erschwinglichen Preisen herstellbar sein.

Besonders kritisch sind diese Anforderungen in Aufzeichnungsflüssigkeiten, ganz besonders in Tinten für das Ink-Jet-Verfahren.
Bei Tinten werden hohe Anforderungen an die Stabilität der Dispersion gestellt, d.h. die Pigmente dürfen nicht ausfallen oder ausflocken. Außerdem sollen Drucke bzw. Schriften eine brillante Farbe zeigen und hohe Echtheiten wie beispielsweise Reibechtheit oder Nassreibechtheit aufweisen.

Während die Pigmente als solche nur noch wenig untersucht werden und man auf die allgemein bekannten organischen oder anorganischen Pigmente zurückgreift, sind die Dispergieradditive heute von großem Interesse.

In US 6,096,801 werden Pigmentformulierungen offenbart, in denen 0,1 bis 10 Gewichtsprozent Pigment und ein Harz, beispielsweise Kolophonium, mit Dendrimeren auf Basis von Acetoacetmetaxiliden beispielsweise den BOLTORN-®-Marken, oder β-Aminopropionsäureamiden enthalten sind. Die offenbarten Dendrimere können an den Enden der Arme mit Molekülen umgesetzt werden, die mehrere Hydroxylgruppen tragen, beispielsweise Pentaerythrit. Sie eignen sich gut als Dispergieradditive, sind jedoch aufwändig zu synthetisieren, und die unter Verwendung von Dendrimeren hergestellten Formulierungen sind deshalb wirtschaftlich unvorteilhaft.

In US 5,561,214 werden hyperverzweigte Polyaspartatester offenbart, die durch Selbstkondensation von Hydroxyaspartatestern hergestellt werden. Die hyperverzweigten Polyaspartate können entweder als solche eingesetzt werden und eignen sich als Bindemittel, oder man setzt sie mit Polyisocyanaten zu Polyharnstoffen um, die sich als Bindemittel für verschiedene Lacksysteme eignen. Zu einer wirtschaftlichen Verwendung als Dispergieradditiv sind sie in der Herstellung jedoch zu teuer.

WO 00/37542 offenbart die Verwendung von Dendrimeren als Dispergiermittel für hydrophobe Partikel in wässrigen Systemen. Zu Dendrimeren zählen in WO 00/37542 auch sogenannte reguläre Dendronen und hyperverzweigte Polymere (Seite 7, Zeile 1). Als Beispiele für hyperverzweigte Polymere werden die in US 5,418,301 beschrieben Polyester zitiert, die sich beispielsweise durch Veresterung von 2,2-Dimethylolpropionsäure erhalten lassen.

Es bestand somit die Aufgabe, neue Aufzeichnungsflüssigkeiten bereitzustellen, die Dispergieradditive enthalten, welche die oben aufgeführten technischen Vorteile bieten und leicht synthetisch zugänglich sind. Weiterhin bestand die Aufgabe, ein Verfahren zur Herstellung der neuen Aufzeichnungsflüssigkeiten bereitzustellen, und außerdem bestand die Aufgabe, Verwendungen für Aufzeichnungsflüssigkeiten bereitzustellen.

Überraschend wurde gefunden, dass die eingangs definierten hyperverzweigten Polyurethane mit mindestens einer pigmentaffinen Gruppe und modifizierte hyperverzweigte Polyurethane sich vorzüglich als Dispergieradditive in Aufzeichnungsflüssigkeiten eigenen. Die Darstellung von hyperverzweigten Polyurethanen mit mindestens einer pigmentaffinen Gruppe, die im Folgenden auch kurz hyperverzweigte Polyurethane genannt werden, und ihre Modifizierung wird unten beschrieben.

Unter Polyurethanen sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Harnstoffgruppen.

Die vorliegende Erfindung geht aus von hyperverzweigten Polyurethanen, die molekular und strukturell uneinheitlich sind. Sie unterscheiden sich durch ihre molekulare Uneinheitlichkeit von Dendrimeren und sind mit erheblich geringerem Aufwand herzustellen.

Die Synthese der zur Ausführung der vorliegenden Erfindung eingesetzten hyperverzweigten Polyurethane kann beispielsweise wie im Folgenden geschildert durchgeführt werden.

Zur Synthese der hyperverzweigten Polyurethane werden bevorzugt ABₓ-Monomere eingesetzt, die sowohl Isocyanat-Gruppen sowie Gruppen, die mit Isocyanat-Gruppen unter Bildung einer Verknüpfung reagieren können, aufweisen. Bei x handelt es sich um eine natürliche Zahl von 2 bis 8. Bevorzugt beträgt x 2 oder 3. Entweder handelt es sich bei A um die Isocyanat-Gruppen und bei B um mit diesen zur Reaktion fähige Gruppen oder es kann der umgekehrte Fall vorliegen.

Bei den mit den Isocyanat-Gruppen zur Reaktion fähigen Gruppen handelt es sich bevorzugt um OH-, NH₂- ,NH-, SH- oder COOH-Gruppen.

Die ABₓ-Monomere sind in bekannter Art und Weise mittels verschiedener Techniken herstellbar.

ABₓ-Monomere können beispielsweise nach der von WO 97/02304 offenbarten Methode unter Anwendung von Schutzgruppentechniken synthetisiert werden. Beispielhaft sei diese Technik an der Herstellung eines AB₂-Monomers aus 2,4-Toluylendiisocyanat (TDI) und Trimethylolpropan erläutert. Zunächst wird eine der Isocyanat-Gruppen des TDI in bekannter Art und Weise verkappt, beispielsweise durch Umsetzung mit einem Oxim. Die verbleibende freie NCO-Gruppe wird mit Trimethylolpropan umgesetzt, wobei eine der drei OH-Gruppen mit der Isocyanat-Gruppe reagiert. Nach Abspalten der Schutzgruppe wird ein Molekül mit einer Isocyanat-Gruppe und zwei OH-Gruppen erhalten.

Besonders vorteilhaft können die ABₓ-Moleküle nach der in DE-A 199 04 444 offenbarten Methode synthetisiert werden, bei der keine Schutzgruppen erforderlich sind. Bei dieser Methode werden Di- oder Polyisocyanate eingesetzt und mit Verbindungen, die mindestens zwei mit Isocyanatgruppen zur Reaktion fähige Gruppen aufweisen, umgesetzt. Zumindest einer der Reaktionspartner weist Gruppen mit gegenüber dem anderen Reaktionspartner unterschiedlicher Reaktivität auf. Bevorzugt weisen beide Reaktionspartner Gruppen mit gegenüber dem anderen Reaktionspartner unterschiedlicher Reaktivität auf. Die Reaktionsbedingungen werden so gewählt, dass nur bestimmte zur Reaktion fähige Gruppen miteinander reagieren können.

Bevorzugte Di- und/oder Polyisocyanate mit NCO-Gruppen unterschiedlicher Reaktivität sind insbesondere leicht und billig verfügbare Isocyanate, beispielsweise aromatische Isocyanate wie 2,4-Toluylendiisocyanat (2,4-TDI), 2,4'-Diphenylmethandiisocyanat (2,4'-MDI), Triisocyanatotoluol, oder aliphatische Isocyanate, wie Isophorondiisocyanat (IPDI), 2-Butyl-2-ethylpentamethylendiisocyanat, 2-Isocyanatopropylcyclohexylisocyanat, 2,4,4- oder 2,2,4-Trimethylhexamethylendiisocyanat, 2,4'-Methylenbis(cyclohexyl)diisocyanat und 4-Methyl-cyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendiisocyanat.

Natürlich können auch Mischungen der genannten Isocyanate verwendet werden.

Als Verbindungen mit mindestens zwei mit Isocyanaten zur Reaktion fähigen Gruppen werden vorzugsweise di-, tri- oder tetrafunktionelle Verbindungen eingesetzt, deren funktionelle Gruppen gegenüber NCO-Gruppen eine unterschiedliche Reaktivität aufweisen. Bevorzugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für die genannten Verbindungen mit mindestens zwei mit Isocyanaten zur Reaktion fähigen Gruppen unterschiedlicher Reaktivität sind Propylenglykol, Glycerin, Mercaptoethanol, Ethanolamin, N-Methylethanol-amin, Diethanolamin, Ethanolpropanolamin, Dipropanolamin, Diisopropanolamin, 2-Amino-1,3-propandiol, 2-Amino-2-methyl-1,3-propandiol oder Tris(hydroxymethyl)-amino-methan. Weiterhin sind auch Mischungen der genannten Verbindungen einsetzbar.

Die Herstellung eines AB₂-Moleküls sei beispielhaft für den Fall eines Diisocyanates mit einem Aminodiol erläutert. Hierbei wird zunächst ein Mol eines Diisocyanats mit einem Mol eines Aminodiols, beispielsweise 2-Amino-1,3-propandiol, bei niedrigen Temperaturen, vorzugsweise im Bereich zwischen -10 bis +30°C, umgesetzt. In diesem Temperaturbereich erfolgt eine praktisch vollständige Unterdrückung der Urethanbildungsreaktion, und die NCO-Gruppen des Isocyanats reagieren ausschließlich mit der Aminogruppe des Aminodiols. Das gebildete AB₂-Molekül weist eine freie NCO-Gruppe sowie zwei freie OH-Gruppen auf und kann zur Synthese eines hyperverzweigten Polyurethans eingesetzt werden.

Durch Erwärmen oder Katalysatorzugabe kann dieses AB₂-Molekül intermolekular zu einem hyperverzweigten Polyurethan reagieren. Als Katalysatoren für die Herstellung der hyperverzweigten Polyurethane werden beispielsweise organische Zinnverbindungen wie Zinndiacetat, Zinndioctoat, Dibutylzinndilaurat oder stark basische Amine wie Diazabicyclooctan, Diazabicyclononan, Diazabicycloundecan, Triethylamin, Pentamethyldiethylentriamin, Tetramethyldiaminoethylether oder vorzugsweise Triethylendiamin oder Bis(N,N-dimethylaminoethyl)ether oder auch schwach basische Amine wie beispielsweise Imidazole eingesetzt. Es können auch Mischkatalysatoren aus einer mindestens einer organischen Zinnverbindung und mindestens einem stark basischen Amin eingesetzt werden. Die Katalysatoren werden vorzugsweise in einer Menge von 0,01 bis 10 Gew.-%, vorzugsweise 0,05 bis 5 Gew.-%, bezogen auf Isocyanat, eingesetzt. Die Synthese des hyperverzweigten Polyurethans erfolgt vorteilhaft ohne vorherige Isolierung des AB₂-Moleküls in einem weiteren Reaktionsschritt bei erhöhter Temperatur, vorzugsweise im Bereich zwischen 30 und 80°C. Bei Verwendung des geschilderten AB₂-Moleküls mit zwei OH-Gruppen und einer NCO-Gruppe entsteht ein hyperverzweigtes Polymer, welches pro Molekül eine freie NCO-Gruppe sowie eine vom Polymerisationsgrad abhängige Zahl von OH-Gruppen aufweist. Die Reaktion kann bis zu hohen Umsätzen durchgeführt werden, wodurch sehr hochmolekulare Strukturen erhalten werden. Sie wird vorzugsweise durch Zugabe geeigneter monofunktioneller Verbindungen oder durch Zugabe einer der Ausgangsverbindungen zur Herstellung des AB₂-Moleküls beim Erreichen des gewünschten Molekulargewichtes abgebrochen werden. Je nach der zum Abbruch verwendeten Ausgangsverbindung entstehen entweder vollständig NCO-terminierte oder vollständig OH-terminierte Moleküle.

Alternativ kann beispielsweise auch ein AB₂-Molekül aus einem Mol Glycerin und 2 mol TDI hergestellt werden. Bei tiefer Temperatur reagieren vorzugsweise die primären Alkoholgruppen sowie die Isocyanat-Gruppe in 4-Stellung, und es wird ein Addukt gebildet, welches eine OH-Gruppe und zwei Isocyanat-Gruppen aufweist und das wie geschildert bei höheren Temperaturen zu einem hyperverzweigten Polyurethan umgesetzt werden kann. Es entsteht zunächst ein hyperverzweigtes Polyurethan, welches eine freie OH-Gruppe sowie eine vom Polymerisationsgrad abhängige mittlere Anzahl von NCO-Gruppen aufweist.

Die Anzahl der NCO-Gruppen pro Molekül ist von 2 bis 100, bevorzugt von 3 bis 20 und besonders bevorzugt bis 10.

Das Molekulargewicht M_{w} der für die vorliegende Erfindung zu verwendenden hyperverzweigten Polyurethane beträgt 500 bis maximal 50.000 g/mol, bevorzugt maximal 15.000 g/mol und besonders bevorzugt maximal 10.000 g/mol und ganz besonders bevorzugt bis 5.000 g/mol.

Die Herstellung der hyperverzweigten Polyurethane kann prinzipiell ohne Lösungsmittel, bevorzugt aber in Lösung erfolgen. Als Lösungsmittel prinzipiell geeignet sind alle bei der Umsetzungstemperatur flüssigen und gegenüber den Monomeren und Polymeren inerten Verbindungen.

Andere Produkte sind durch weitere Synthesevarianten zugänglich. Beispielhaft seien an dieser Stelle AB₃-Moleküle genannt. AB₃-Moleküle lassen sich beispielsweise durch Reaktion von Diisocyanaten mit Verbindungen mit 4 gegenüber Isocyanat zur Reaktion fähigen Gruppen erhalten. Beispielhaft sei die Umsetzung von Toluylendiisocyanat mit Tris(hydroxymethyl)-aminomethan genannt.

Zum Abbruch der Polymerisation können polyfunktionelle Verbindungen eingesetzt werden, die mit den jeweiligen A-Gruppen reagieren können. Auf diese Art und Weise können mehrere kleine hyperverzweigte Moleküle zu einem großen hyperverzweigten Molekül verknüpft werden.

Hyperverzweigte Polyurethane mit kettenverlängerten Ästen lassen sich beispielsweise erhalten, indem zur Polymerisationsreaktion neben ABₓ-Molekülen zusätzlich im molaren Verhältnis 1:1 ein Diisocyanat und eine Verbindung, die zwei mit Isocyanatgruppen zur Reaktion fähige Gruppen aufweist, eingesetzt werden. Diese zusätzlichen AA- bzw. BB-Verbindungen können auch noch über weitere funktionelle Gruppen verfügen, die bei den Reaktionsbedingungen aber nicht reaktiv gegenüber den A- oder B-Gruppen sein dürfen. Auf diese Art und Weise können weitere Funktionalitäten in das hyperverzweigte Polymer eingebracht werden.

Weitere Synthesevarianten für hyperverzweigte Polyurethane finden sich in DE-A 100 13 187 und DE-A 100 30 869.

Besonders vorteilhaft ist die Verwendung solcher hyperverzweigter Polyurethane, deren funktionellen Gruppen hydrophobiert, hydrophiliert oder umfunktionalisiert werden. Auf diese Art und Weise werden der erfindungsgemäßen Anwendung der hyperverzweigten Polyurethane in Aufzeichnungsflüssigkeiten besonders angepasste Polyurethane zugänglich, indem pigmentaffine Gruppen eingeführt werden. Zur Umfunktionalisierung eignen sich aufgrund ihrer Reaktivität ganz besonders solche hyperverzweigten Polyurethane, die Isocyanat-Gruppen aufweisen. Selbstverständlich können auch OH- oder NH₂-terminierte Polyurethane mittels geeigneter Reaktionspartner umfunktionalisiert werden.

Beispiele für pigmentaffine Gruppen, die mittels geeigneter Reaktionspartner eingeführt werden, sind -COOH, -COOR', -CONHR', -CONH₂, -OH, -SH, -NH₂, -NHR', -NR'₂, -SO₃H,
-SO₃R', -N(Phthalimid), -NHCOOR', -NHCONH₂, -NHCONHR' oder -CN. Bei den Resten R' der besagten Gruppen handelt es sich um geradkettige oder verzweigte Alkylreste, um Aralkylreste oder um Arylreste, die auch noch weiter substituiert sein können, beispielsweise um C₁-C₄₀-Alkylreste oder um C₆-C₁₄-Arylreste. Besonders bevorzugt sind die folgenden Reste:

C₁-C₄₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl oder n-Eicosyl, besonders bevorzugt ist Methyl;
C₆-C₁₄-Aryl, beispielsweise Phenyl, α-Naphthyl, β-Naphthyl, 1-Anthracenyl, 2-Anthracenyl oder 9-Anthracenyl C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl.

Gruppen, die über ausreichend acide H-Atome verfügen, können durch Behandlung mit Basen in die entsprechenden Salze überführt werden. Gut geeignete Basen sind beispielsweise die Hydroxide und Hydrogencarbonate von Alkalimetallen oder Erdalkalimetallen oder die Carbonate von Alkalimetallen. Weitere gut geeignete Basen sind flüchtige Amine, d.h. Amine mit einem Siedepukt bei Atmosphärendruck von bis 180°C, wie beispielsweise Ammoniak, Methylamin, Dimethylamin, Trimethylamin, Ethylamin, Ethanolamin oder Methyldiethanolamin. Analog lassen sich basische Gruppen mit Säuren wie beispielsweise α-Hydroxycarbonsäuren oder α-Aminosäuren oder auch α-Hydroxysulfonsäuren in die entsprechenden Salze überführen. Dadurch lassen sich wasserlösliche hyperverzweigte Polyurethane erhalten.

Durch Umsetzung NCO-terminierter Produkte mit aliphatischen oder aromatischen Alkoholen, Thiolen, primären oder sekundären Aminen oder Carbonsäuren lassen sich hydrophobierte Produkte erhalten. Geeignet sind insbesondere Alkohole und primäre oder sekundäre Amine mit

C₄-C₄₀-Alkylresten, beispielsweise n-Butyl, n-Hexyl; bevorzugt C₈-C₄₀, beispielsweise n-Octyl, n-Decyl;
C₆-C₁₄-Arylresten, wobei die Reste wie vorstehend definiert sind, oder mit heteroaromatischen Gruppen wie beispielsweise α-Pyridyl, β-Pyridyl, γ-Pyridyl, N-Pyrryl-, α-Pyrryl, β-Pyrryl, Porphyrinyl, 2-Furanyl, 3-Furanyl, 2-Thiophenyl, 3-Thiophenyl, N-Pyrazolyl, N-Imidazolyl, N-Triazolyl, N-Oxazolyl, N-Indolyl, N-Carbazolyl, 2-Benzofuranyl, 2-Benzothiophenyl, N-Indazolyl, Benztriazolyl, 2-Chinolinyl, 3-Isochinolinyl oder α-Phenanthrolinyl.

Ganz besonders bevorzugt sind aromatische Amine wie beispielsweise Anilin oder α-Naphthylamin. Besonders geeignete Carbonsäurederivate sind beispielsweise Carbonsäuren und Carbonsäureamide von aliphatischen C₂-C₁₆-Mono- oder Dicarbonsäuren und aromatischen C₆-C₁₄-Mono- oder Dicarbonsäuren. Ganz besonders bevorzugt ist die Umsetzung mit Phthalimid.

Säuregruppen lassen sich beispielsweise durch Umsetzung mit Hydroxycarbonsäuren, Mercaptocarbonsäuren, Hydroxysulfonsäuren oder Aminosäuren einführen. Als Beispiele geeigneter Reaktionspartner seien Hydroxyessigsäure, Hydroxypivalinsäure, 4-Hydroxybenzoesäure, 12-Hydroxydodecansäure, 2-Hydroxyethansulfonsäure, Mercaptoessigsäure, Dimethylolpropionsäure, Glycin, β-Alanin oder Taurin genannt.

Die oben beschriebenen hyperverzweigten Polyurethane lassen sich erfindungsgemäß als Dispergieradditive in Aufzeichnungsflüssigkeiten verwenden, wenn sie mindestens eine hydrophile Gruppe aufweisen, ausgewählt aus -COOH, -CONHR', -CONH₂, -OH, -SH, -NH₂, -NHR', -NR'_{2'} -SO₃H, -SO₃R', -NHCOOR' und -NHCONH₂.

Bevorzugt sind Aufzeichnungsflüssigkeiten, enthaltend modifizierte und insbesondere hydrophil modifizierte hyperverzweigte Polyurethane.

Bevorzugt sind Aufzeichnungsflüssigkeiten, enthaltend solche modifizierte hyperverzweigte Polyurethane, die erhält sind, indem man ein oder mehrere hyperverzweigte Polyurethane mit einem oder mehreren Polymeren der Formel I umsetzt.

U-(M)_{y}-T I

Dabei sind die Variablen wie folgt definiert:
- U: Wasserstoff,
C₁-C₁₈-Alkyl, verzweigt oder unverzweigt, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl und n-Octadecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl- butyl, 2-Phenyl-butyl, 3-Phenyl-butyl und 4-Phenyl-butyl, besonders bevorzugt Benzyl;
oder ein Rest aus einem Initiatormolekül, beispielsweise 2,2-Dimethyl-2-cyanoethyl, oder einem anderen Initiatormolekül wie beispielsweise den gängigen organischen Peroxiden, organischen Azoverbindungen, oder C-C-spaltenden Initiatoren wie Dialkylperoxiden, Peroxocarbonsäuren, Peroxidicarbonaten, Peroxidester, Hydroperoxide, Ketonperoxiden, Azodinitrilen oder Benzpinakolsilylethern.
- M: steht für eine oder mehrere verschiedene Monomereinheiten, beispielsweise (Meth)acrylateinheiten, (Meth)acrylamideinheiten, Polyvinylacetateinheiten, Polyvinylalkoholeinheiten oder Polyethylenimineinheiten, lineare Polyurethaneinheiten, Polyestereinheiten, Polystyroleinheiten, Polyethereinheiten wie beispielsweise Polyethylenglykoleinheiten oder Poly-THF-Einheiten, Polyethyleneinheiten oder Polyamideinheiten;
- y: ist eine ganze Zahl von 10 bis 100.000, bevorzugt von 100 bis 10.000.
- T: sind funktionelle Gruppen, die mit den NCO-Gruppen oder OH-, NH- oder SH-Gruppen der erfindungsgemäßen polymeren Dispergieradditive reagieren können, beispielsweise OH, NHR, SH, Carboxylgruppen oder Carboxylamidgruppen.

Dabei sind die oben genannten Monomereinheiten beispielsweise:

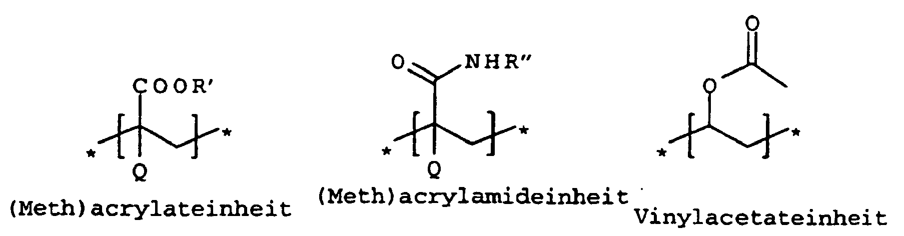

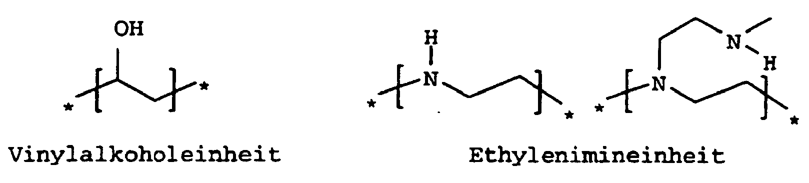

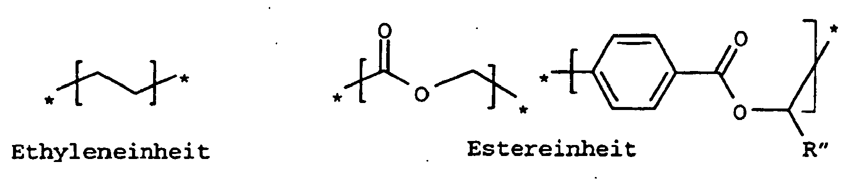

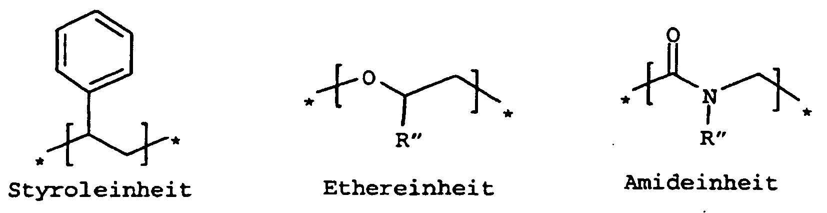

R'' steht für Wasserstoff oder für R'. Q steht für Wasserstoff oder Methyl.

Weisen die oben beschriebenen Dispergieradditive oder eine oder mehrere freie NCO-Gruppen auf, so wird T gewählt aus OH, NHR, SH. Weisen die oben beschriebenen Dispergieradditive eine oder mehrere freie OH-, NH- oder SH-Gruppen auf, so wählt man T bevorzugt aus Carboxylgruppen aus.

Die Umsetzung der hyperverzweigten Polyurethane mit dem oder den Polymeren der Formel I erfolgt üblicherweise bei Temperaturen von -20 bis 120°C, bevorzugt bis +60°C. Die Umsetzung kann durch Zugabe eines Katalysators beschleunigt werden. Als Katalysatoren für die Herstellung der modifizierten Polyurethane werden die bekannten Katalysatoren aus der Polyurethanchemie eingesetzt, beispielsweise:
organische Zinnverbindungen wie beispielsweise Zinndiacetat, Zinndioctoat, Dibutylzinndilaurat,
stark basische Amine wie Diazabicyclooctan, Diazabicyclononan, Diazabicycloundecan, Triethylamin, Pentamethyldiethylentriamin, Tetramethyldiaminoethylether, oder vorzugsweise Triethylendiamin oder Bis(*N,N*-dimethylaminoethyl)ether oder auch schwach basische Amine wie beispielsweise Imidazol.

Es können auch Mischkatalysatoren aus einer mindestens einer organischen Zinnverbindung und mindestens einem stark basischen Amin eingesetzt werden. Die Katalysatoren werden vorzugsweise in einer Menge von 0,01 bis 10 Gew.-%, vorzugsweise 0,05 bis 5 Gew.-%, eingesetzt. Man kann die Umsetzung in einem Lösemittel durchführen, wobei als Lösemittel prinzipiell alle Lösemittel geeignet sind, die weder mit dem Polyurethan noch mit dem Polymer reagieren.

Bevorzugt sind Aufzeichnungsflüssigkeiten, die modifizierte hyperverzweigte Polyurethane enthalten, wobei das modifizierte hyperverzweigte Polyurethan erhältlich ist durch Umsetzung eines Unterschusses, bezogen auf die NCO-Gruppen des hyperverzweigten Polyurethans, an Polymer der Formel I mit einem oder mehreren hyperverzweigten Polyurethanen, und anschließende Umsetzung der verbliebenen NCO-Gruppen zu pigmentaffinen Gruppen, insbesondere zu Carboxylgruppen.

Besonders bevorzugt sind Aufzeichnungsflüssigkeiten, enthaltend solche modifizierte hyperverzweigten Polyurethane, die erhältlich sind durch Umsetzung der oben beschriebenen hyperverzweigten Polyurethane mit einem Polyetherderivat oder einer Mischung aus mindestens zwei Polyetherderivaten.

Unter Polyetherderivaten im Sinne der vorliegenden Erfindung sind beispielsweise Polyalkylenglykolderivate der allgemeinen Formel II 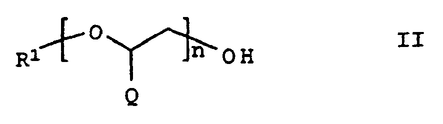 zu verstehen, wobei die Variablen wie folgt definiert sind.
- R¹: ausgewählt aus Wasserstoff oder bevorzugt
- C₁-C₄₀-Alkyl,: beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Hexadecyl oder n-Ei-cosyl, besonders bevorzugt ist Methyl;
wobei das C₁-C₄₀-Alkyl mit einer oder mehreren Hydroxylgruppen substituiert sein kann mit der Maßgabe, dass die Zahl der Hydroxylgruppen maximal so groß ist wie die Zahl der C-Atome im betreffenden C₁-C₄₀-Alkyl;
- C₆-C₁₄-Aryl,: beispielsweise Phenyl, α-Naphthyl, β-Naphthyl, 1-Anthracenyl, 2-Anthracenyl oder 9-Anthracenyl
- C₇-C₁₃-Aralkyl,: bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl.
- n: eine ganze Zahl von 2 bis 500 , bevorzugt 2 bis 200, besonders bevorzugt 5 bis 100 und ganz besonders bevorzugt bis 50.

Weiterhin sind unter Polyetherderivaten im Sinne der vorliegenden Erfindung auch Poly-THF-Derivate der allgemeinen Formel III 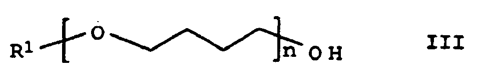 zu verstehen, in denen die Variablen wie oben definiert sind.

Weiterhin sind unter Polyetherderivaten im Sinne der vorliegenden Erfindungen auch Copolymere aus Ethylenoxid und Propylenoxid oder Butylenoxid oder Terpolymeren aus Ethylenoxid und Propylenoxid und Butylenoxid zu verstehen, wobei die Copolymere als Blockcopolymere oder statistische Copolymere beziehungsweise Terpolymere vorliegenden können. Dabei sind die Molverhältnisse der Monomeren unkritisch. Beispiele für Blockcopolymere sind die Pluronics®-Marken der BASF Aktiengesellschaft. Schließlich sind unter Polyetherderivaten im Sinne der vorliegenden Erfindung auch die Tetronics®-Marken der BASF Aktiengesellschaft zu verstehen, das sind verzweigte Blockcopolymere von Ethylenoxid und Propylenoxid, bei denen die Verzweigung durch den Einbau einer Ethylendiamin-Einheit pro Molekül erfolgt.

Unter Polyalkylenderivaten der Formel II im Sinne der vorliegenden Erfindung sind auch Gemische aus mehreren Polyalkylenderivaten der Formel II zu verstehen.

Bevorzugte Polyalkylenglykolderivate im Sinne der vorliegenden Erfindung sind methylverkappte Polyethylenglykolderivate der allgemeinen Formel II.

Die Umsetzung der hyperverzweigten Polyurethane mit den Polyalkylenglykolderivate der Formel II bzw. den Poly-THF-Derivaten der Formel III erfolgt üblicherweise bei Temperaturen von -20 bis +60°C. Die Umsetzung kann durch Zugabe eines Katalysators durchgeführt werden. Als Katalysatoren für die Herstellung der bevorzugten modifizierten Polyurethane können die oben genannten Katalysatoren und Mischkatalysatoren aus der Polyurethanchemie eingesetzt werden.

Die Katalysatoren werden vorzugsweise in einer Menge von 0,01 bis 10 Gew.-%, vorzugsweise 0,05 bis 5 Gew.-%, eingesetzt. Man kann die Umsetzung in einem Lösemittel durchführen, wobei als Lösemittel prinzipiell alle Lösemittel geeignet sind, die weder mit dem Polyurethan noch mit dem Polyetherderivat reagieren.

Das Molverhältnis der Reaktionspartner beeinflusst die Dispergiereigenschaften des hyperverzweigten Polyurethans. Man kann die Molverhältnisse so wählen, dass eine NCO-Gruppe pro Äquivalent OH-Gruppen des Polyetherderivates eingesetzt werden. Man kann aber auch einen Unterschuss an Äquivalenten OH-Gruppen einsetzen und anschließend die nicht umgesetzten NCO-Gruppen des modifizierten hyperverzweigten Polyurethans mit Alkanolen, Aryl- oder Alkylaminen, insbesondere Alkanolen und Alkylaminen mit C₈-C₄₀-Alkylresten oder Arylaminen mit C₆-C₁₄-Arylresten wie beispielsweise Anilin oder α-Naphthylamin, zu pigmentaffinen Gruppen umsetzen.

In einer ganz besonders bevorzugten Ausführungsform enthalten die erfindungsgemäßen Aufzeichnungsflüssigkeiten ein oder mehrere Melaminderivate der allgemeinen Formel IV 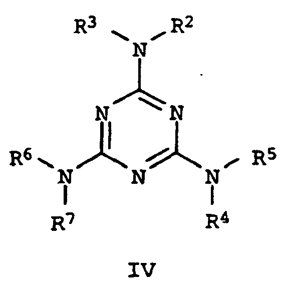 in denen die Variablen R² bis R⁷ gleich oder verschieden und wie folgt definiert sind:
Wasserstoff oder
CH₂-OR⁸ oder CH(OR⁸)₂ oder CH₂-N(R⁸)₂
wobei R⁸ gleich oder verschieden und ausgewählt aus
Wasserstoff,
C₁-C₁₂-Alkyl, verzweigt oder unverzweigt, ausgewählt aus C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
Alkoxyalkylen wie beispielsweise (-CH₂-CH₂-O)ₘ-H, (-CHCH₃-CH₂-O)ₘ-H, (-CH₂-CHCH₃-O)ₘ-H, (-CH₂-CH₂-CH₂-CH₂-O)ₘ-H, wobei m eine ganze Zahl von 1 bis 20, bevorzugt 1 bis 10 und besonders bevorzugt 1 bis 5 bedeutet.

Bevorzugt sind die Reste R², R⁴ und R⁶ verschieden.

Besonders bevorzugt sind R² und R³ gleich Wasserstoff, und besonders bevorzugt ist R⁴ und R⁵ gleich CH₂-OH. Ganz besonders bevorzugt sind R² und R³ gleich Wasserstoff und R⁴ gleich CH₂-OH.

Melaminderivate der allgemeinen Formel IV sind an sich bekannt und beispielsweise als Luwipal® der BASF Aktiengesellschaft und als Cymel® 327 der Firma Cytec im Handel erhältlich. Melaminderivate im Sinne der vorliegenden Erfindung liegen im Allgemeinen nicht rein gemäß einer definierten Formel vor; üblicherweise werden intermolekulare Umlagerungen der Reste R² bis R⁷, also Um-Acetalisierungsreaktionen und Um-Aminalisierungsreaktionen, und auch zu einem gewissen Grade Kondensationsreaktionen und Abspaltungsreaktionen beobachtet. Die oben angegebene Formel IV ist in dem Sinne zu verstehen, dass sie die stöchiometrischen Verhältnisse der Substituenten definiert und auch intermolekulare Umlagerungsprodukte und Kondensationsprodukte mit umfasst.

Üblicherweise setzt man die oben beschriebenen hyperverzweigten Polyurethane und Melaminderivate der allgemeinen Formel IV in einem Gewichtsverhältnis in einem Bereich von,0,01 zu 1 bis 100 zu 1 ein, bevorzugt 0,1 zu 1 bis 50 zu 1 und besonders bevorzugt 1 zu 1 bis 10 zu 1.

Ein weiterer Gegenstand der vorliegenden Erfindung sind Dispergierbindemittelsysteme, die durch Mischen von hyperverzweigten Polyurethanen oder modifizierten hyperverzweigten Polyurethanen mit einem oder mehreren Melaminderivaten der allgemeinen Formel IV 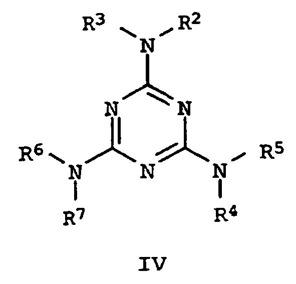 in einem Gewichtsverhältnis in einem Bereich von 0,01 zu 1 bis 100 zu 1, bevorzugt 0,1 zu 1 bis 50 zu 1 und besonders bevorzugt 1 zu 1 bis 10 zu 1 erhältlich sind, wobei die Variablen R² bis R⁷ gleich oder verschieden und wie folgt definiert sind:
Wasserstoff oder
CH₂-OR⁸ oder CH(OR⁸)₂ oder CH₂-N(R⁸)₂

wobei R⁸ gleich oder verschieden und ausgewählt aus
Wasserstoff,
C₁-C₁₂-Alkyl, verzweigt oder unverzweigt, ausgewählt aus C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
Alkoxyalkylen wie beispielsweise (-CH₂-CH₂-O)ₘ-H, (-CHCH₃-CH₂-O)ₘ-H, (-CH₂-CHCH₃-O)ₘ-H, (-CH₂-CH₂-CH₂-CH₂-O)ₘ-H, wobei m eine ganze Zahl von 1 bis 20, bevorzugt 1 bis 10 und besonders bevorzugt 1 bis 5 bedeutet.

Bevorzugt sind die Reste R², R⁴ und R⁶ verschieden.

Besonders bevorzugt sind R² und R³ gleich Wasserstoff, und besonders bevorzugt ist R⁴ und R⁵ gleich CH₂-OH. Ganz besonders bevorzugt sind R² und R³ gleich Wasserstoff und R⁴ gleich CH₂-OH.

Ein weiterer Aspekt der vorliegenden Erfindung ist ein Verfahren zur Herstellung der erfindungsgemäßen Dispergierbindemittel. Das erfindungsgemäße Verfahren gelingt durch Vermischen von einem oder mehreren der vorstehend beschriebenen hyperverzweigten Polyurethanen oder einem oder mehreren der vorstehend beschriebenen modifizierten hyperverzweigten Polyurethanen mit einem oder mehreren Melaminderivaten der Formel IV, beispielsweise in Kugelmühlen, Rührwerksmühlen, Dispensern, Dissolvern oder Korbmühlen. Beispiele für solche Aggregate sind Geräte der Fa. Getzmann oder Fa. Skandex, die kommerziell erhältlich sind.

Ein weiterer Aspekt der vorliegenden Erfindung ist ein Verfahren zur Herstellung der erfindungsgemäßen Aufzeichnungsflüssigkeiten unter Verwendung der vorstehend beschrieben hyperverzweigten Polyurethane bzw. der vorstehend beschriebenen modifizierten hyperverzweigten Polyurethane. Das erfindungsgemäße Verfahren ist dadurch gekennzeichnet, dass man ein oder mehrere der vorstehend beschrieben hyperverzweigten Polyurethane bzw. der vorstehend beschriebenen modifizierten hyperverzweigten Polyurethane mit einem oder mehreren feinteiligen anorganischen oder organischen Farbmittel und Wasser und gegebenenfalls einem oder mehreren Melaminderivat der allgemeinen Formel IV und gegebenenfalls Hilfsstoffen innig vermischt.

Ein weiterer Aspekt der vorliegenden Erfindung ist ein Verfahren zur Herstellung von Farbmittelzubereitungen unter Verwendung der erfindungsgemäßen Dispergierbindemittel sowie ein Verfahren zur Herstellung von Aufzeichnungsflüssigkeiten unter Verwendung der erfindungsgemäßen Dispergierbindemittel und/oder der erfindungsgemäßen Farbmittelzubereitungen.

Die erfindungsgemäßen Farbmittelzubereitungen erhält man durch Vermischen der erfindungsgemäßen Dispergierbindemittel mit einem oder mehreren feinteiligen anorganischen oder organische Farbmitteln, beispielsweise in einer Kugelmühle. Vorzugsweise werden die erfindungsgemäßen Farbmittelzubereitungen so hergestellt, dass man auf die Isolierung der erfindungsgemäßen Dispergierbindemittel verzichtet und die vorstehend beschriebenen hyperverzweigten Polyurethane oder die wie vorstehend beschrieben modifizierten hyperverzweigten Polyurethane mit einem oder mehreren Melaminderivaten der allgemeinen Formel IV, Wasser und einem oder mehreren in Wasser schwer löslichen Farbmitteln vermischt, beispielsweise in einer Kugelmühle. Dabei bilden sich die erfindungsgemäßen Dispergierbindemittel während der Herstellung der erfindungsgemäßen Farbmittelzubereitungen *in situ.* In einer Kugelmühle hergestellte erfindungsgemäße Farbmittelzubereitungen werden auch als Anreibungen bezeichnet.

Die erfindungsgemäßen Farbmittelzubereitungen enthalten neben den Dispergierbindemitteln Wasser sowie in Wasser oder in einem Wasser/Lösungsmittel-Gemisch vorzugsweise schwer lösliche, feinteilige, organische oder anorganische Farbmittel, das sind beispielsweise nach der Definition in DIN 55944 Pigmente. Statt Pigmenten lassen sich auch Küpenfarbstoffe und Dispersionsfarbstoffe einsetzen. Selbstverständlich können die erfindungsgemäßen Farbmittelzubereitungen auch Farbmittelmischungen enthalten, vorzugsweise liegt jedoch nur ein Farbmittel vor. Als Schönungsmittel können diese Pigmentzubereitungen im Farbton dem Pigment ähnliche lösliche Farbstoffe, insbesondere Direkt-, Säure- oder Reaktivfarbstoffe enthalten.

Unter Farbmitteln im Sinne der vorliegenden Erfindung sind bevorzugt zu verstehen:
Organische Pigmente:
   - - Monoazopigmente:: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
   - - Disazopigmente:: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
   - - Anthanthronpigmente:: C.I. Pigment Red 168 (C.I. Vat Orange 3);
   - - Anthrachinonpigmente:: C.I. Pigment Yellow 147 und 177; C.I. Pigment Violet 31;
   - - Anthrachinonpigmente:: C.I. Pigment Yellow 147 und 177; C.I. Pigment Violet 31;
   - - Anthrapyrimidinpigmente:: C.I. Pigment Yellow 108 (C.I. Vat Yellow 20);
   - - Chinacridonpigmente:: C.I. Pigment Red 122, 202 und 206; C.I. Pigment Violet 19;
   - - Chinophthalonpigmente:: C.I. Pigment Yellow 138;
   - - Dioxazinpigmente:: C.I. Pigment Violet 23 und 37;
   - - Flavanthronpigmente:: C.I. Pigment Yellow 24 (C.I. Vat Yellow 1);
   - - Indanthronpigmente:: C.I. Pigment Blue 60 (C.I. Vat Blue 4) und 64 (C.I. Vat Blue 6);
   - - Isoindolinpigmente:: C.I. Pigment Orange 69; C.I. Pigment Red 260; C.I. Pigment Yellow 139 und 185;
   - - Isoindolinonpigmente:: C.I. Pigment Orange 61; C.I. Pigment Red 257 und 260; C.I. Pigment Yellow 109, 110, 173 und 185;
   - - Isoviolanthronpigmente:: C.I. Pigment Violet 31 (C.I. Vat Violet 1);
   - - Metallkomplexpigmente:: C.I. Pigment Yellow 117, 150 und 153; C.I. Pigment Green 8;
   - - Perinonpigmente:: C.I. Pigment Orange 43 (C.I. Vat Orange 7); C.I. Pigment Red 194 (C.I. Vat Red 15);
   - - Perylenpigmente:: C.I. Pigment Black 31 und 32; C.I.
   Pigment Red 123, 149, 178, 179 (C.I. Vat Red 23), 190 (C.I. Vat Red 29) und 224; C.I. Pigment Violet 29;
   - - Phthalocyaninpigmente:: C.I. Pigment Blue 15, 15:1, 15:2, 15:3, 15:4, 15:6 und 16; C.I. Pigment Green 7 und 36;
   - - Pyranthronpigmente:: C.I. Pigment Orange 51; C.I. Pigment Red 216 (C.I. Vat Orange 4);
   - - Thioindigopigmente:: C.I. Pigment Red 88 und 181 (C.I. Vat Red 1); C.I. Pigment Violet 38 (C.I. Vat Violet 3);
   - - Triarylcarboniumpigmente:: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
   - - C.I. Pigment Yellow 101: (Aldazingelb);
   - - C.I. Pigment Brown 22;:

Küpenfarbstoffe (außer den bereits oben genannten):
- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;
anorganische Pigmente:
- - Weißpigmente:: Titandioxid (C.I. Pigment White 6), Zinkweiß, Farbenzinkoxid; Zinksulfid, Lithopone; Bleiweiß;
- - Schwarzpigmente:: Eisenoxidschwarz (C.I. Pigment Black 11), Eisen-Mangan-Schwarz, Spinellschwarz (C.I. Pigment Black 27); Ruß (C.I. Pigment Black 7);
- - Buntpigmente:: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;
Eisenoxidbraun, Mischbraun, Spinell- und Korundphasen (C.I. Pigment Brown 24, 29 und 31), Chromorange;
Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- - Interferenzpigmente:: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7. Folgende Pigmentkombinationen sind besonders zu empfehlen:
- C.I. Pigment Yellow 138, C.I. Pigment Violet 19, C.I. Pigment Blue 15:3 und C.I. Pigment Black 7;
- C.I. Pigment Yellow 138, C.I. Pigment Red 122, C.I. Pigment Blue 15:3 oder 15:4 und C.I. Pigment Black 7;
- C.I. Pigment Yellow 138, C.I. Pigment Violet 19, C.I. Pigment Blue 15:3, C.I. Pigment Black 7, C.I. Pigment Orange 43 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 5 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 38 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 43 und C.I. Pigment Green 7.

Als Farbstoffe, die in Wasser im Wesentlichen unlöslich sind, eignen sich neben den bereits genannten Küpenfarbstoffen insbesondere Azo-, Anthrachinon-, Chinophthalon-, Benzodifuran-, Methin- und Azamethinfarbstoffe, die frei von sauren bzw. ionischen Gruppen sind.
- C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
- C.I. Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
- C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
- C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
- C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
- C.I. Disperse Green 1, 2, 5, 6 und 9;
- C.I. Disperse Brown 1, 2, 3, 4, 4:1, 5, 7, 8, 9, 10, 11, 18, 19, 20 und 21;
- C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36;
- C.I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;
- C.I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112 und 113;
- C.I. Solvent Red 1, 2, 3, 4, 8, 16, 17, 18, 19, 23, 24, 25, 26, 27, 30, 33, 35, 41, 42, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247 und 248;
- C.I. Solvent Violet 2, 8, 9, 11, 13, 14, 21, 21:1, 26, 31, 36, 37, 38, 45, 46, 47, 48, 49, 50, 51, 55, 56, 57, 58, 59, 60 und 61;
- C.I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139 und 143;
- C.I. Solvent Green 1, 3, 4, 5, 7, 28, 29, 32, 33, 34 und 35;
- C.I. Solvent Brown 1, 3, 4, 5, 12, 20, 22, 28, 38, 41, 42, 43, 44, 52, 53, 59, 60, 61, 62 und 63;
- C.I. Solvent Black 3, 5, 5:2, 7, 13, 22, 22:1, 26, 27, 28, 29, 34, 35, 43, 45, 46, 48, 49 und 50.

Darüber hinaus eignen sich substituierte Benzodifuranonfarbstoffe, deren Grundkörper der Formel A entspricht.

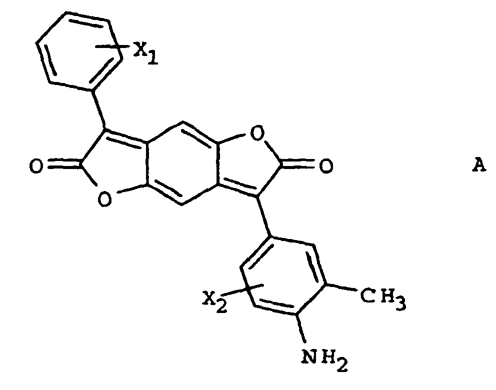

Solche Farbstoffe können an einem oder beiden Phenylringen substituiert sein. Als Substituenten X¹ und X² kommen Halogen, Alkyl, das gegebenenfalls durch nicht benachbarte Sauerstoffatome unterbrochen ist, Alkoxy, dessen Alkylrest durch Sauerstoffatome unterbrochen sein kann und darüber hinaus substituiert sein kann, Hydroxy, gegebenenfalls substituiertes Amino, Cyano, Nitro und Alkoxycarbonyl in Betracht.

Ferner sind Farbstoffe der folgenden Formeln B bis E geeignet:

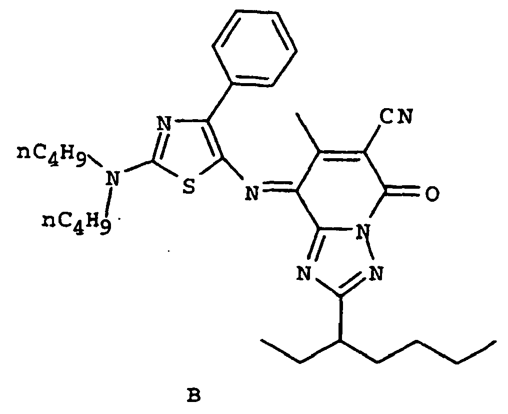

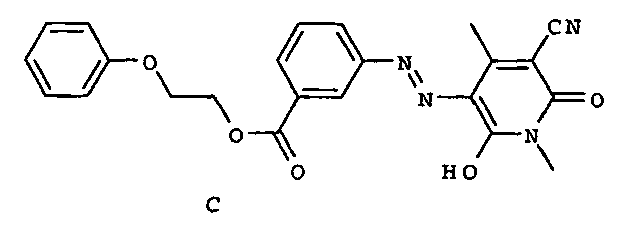

Diese und weitere Beispiele für Farbmittel finden sich bei W. Herbst, K. Hunger, *Industrial Organic Pigments,* VCH Weinheim, **1993**.

Die erfindungsgemäßen Farbmittelzubereitungen enthalten in der Regel 0,01 bis 20 Gew.-%, bevorzugt 0,2 bis 10 Gew.-%, besonders bevorzugt 1 bis 6 Gew.-% Farbmittel, wobei Mengen im Bereich von 1 bis 6 Gew.-% besonders geeignet sind.

Die dispergierten Farbmittel sollten möglichst feinteilig sein. Bevorzugt haben 95%, besonders bevorzugt 99%, der Farbmittelteilchen einen mittleren Teilchendurchmesser 1 µm, vorzugsweise 0,5 µm und besonders bevorzugt bis 0,2 µm. Bevorzugt beträgt der mittlere Teilchendurchmesser mindestens 0,05 µm.

Wasser stellt den Hauptbestandteil der erfindungsgemäßen Farbmittelzubereitungen dar, wobei vollentsalztes Wasser, wie es beispielsweise durch die Verwendung eines Ionenaustauschers erhältlich ist, bevorzugt ist. Sein Gehalt beträgt üblicherweise 30 bis 95 Gew.-%. Für die erfindungsgemäßen Zubereitungen ist dabei ein Wassergehalt von 40 bis 60 Gew.-% bevorzugt.

Die erfindungsgemäßen Farbmittelzubereitungen weisen einen Gehalt von in der Regel 1 bis 40 Gew.-%, bevorzugt von 5 bis 30 Gew.-%, an Dispergierbindemittel auf.

Die erfindungsgemäßen Farbmittelzubereitungen können weitere Hilfsstoffe enthalten.

Beispielsweise können die erfindungsgemäßen Farbmittelzubereitungen ein oder mehrere organische Lösungsmittel als Hilfsstoffe enthalten. Niedermolekulares Polytetrahydrofuran ist ein bevorzugter Hilfsstoff, es kann allein oder vorzugsweise im Gemisch mit einem oder mehreren schwer verdampfbaren, in Wasser löslichen oder mit Wasser mischbaren organischen Lösungsmitteln eingesetzt werden.

Das bevorzugt verwendete Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol.

Polytetrahydrofuran kann auf bekannte Weise über kationische Polymerisation von Tetrahydrofuran hergestellt werden. Dabei entstehen lineare Polytetramethylenglykole.

Als Hilfsstoff eingesetzte andere organische Lösemittel sind im Allgemeinen schwer verdampfbare und damit eine wasserrückhaltende Wirkung besitzende organische Lösungsmittel, die in Wasser löslich oder mit Wasser mischbar sind. Unter schwer verdampfbaren Lösemitteln sind dabei einen Siedepunkt > 100°C aufweisende Lösungsmittel zu verstehen.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2-und 1,3-Propylenglykol oder Glycerin.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmono-n-butylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmitteln gemischt werden.

Die erfindungsgemäßen Farbmittelzubereitungen enthalten in der Regel 0,1 bis 40 Gew.-%, bevorzugt 2,5 bis 30 Gew.-%, besonders bevorzugt 5 bis 25 Gew.-%, und ganz besonders bevorzugt 10 bis 20 Gew.-%, Lösungsmittel.

Die Lösungsmittel, insbesondere auch die genannten besonders bevorzugten Lösungsmittelkombinationen, können vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittels noch verstärkt.

Die erfindungsgemäßen Aufzeichnungsflüssigkeiten können weitere Hilfsmittel, wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/ oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Benetzer (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil der erfindungsgemäßen Pigmentzubereitungen sind, beträgt ihre Gesamtmenge in der Regel 2 Gew.-%, insbesondere 1 Gew.-%, bezogen auf das Gewicht der Farbmittelzubereitung.

Die erfindungsgemäßen Aufzeichnungsflüssigkeiten weisen üblicherweise eine dynamische Viskosität von 1 bis 20 mPa·s auf, vorzugsweise 2 bis 15 mPa·s auf, gemessen mit einem Rotationsviskosimeter der Fa. Haake nach DIN 53019-1.

Die Oberflächenspannung der erfindungsgemäßen Aufzeichnungsflüssigkeiten beträgt in der Regel 24 bis 70 mN/m, insbesondere 30 bis 60 mN/m, gemessen mit einem Digital-Tensiometer K 10 der Fa. Krüss bei Raumtemperatur. Der pH-Wert der erfindungsgemäßen Farbmittelzubereitungen liegt im Allgemeinen bei 5 bis 10, vorzugsweise bei 7 bis 9, gemessen mit einem pH-Meter 763 der Fa. Knick.

Die erfindungsgemäßen Aufzeichnungsflüssigkeiten weisen eine besonders niedrige kinematische Viskosität auf, insbesondere im Vergleich zu solchen Aufzeichnungsflüssigkeiten, die ein herkömmliches polymeres Bindemittel enthalten.

Zur Formulierung der erfindungsgemäßen Aufzeichnungsflüssigkeiten kann man so vorgehen, dass man ein oder mehrere hyperverzweigte Polyurethane mit Wasser, einem oder mehreren anorganischen oder organischen Farbmitteln und einem oder mehreren Melaminderivaten der allgemeinen Formel IV sowie gegebenenfalls Zusätzen zu Anreibungen vermischt, wie oben beschrieben. Möglich ist jedoch auch, das oder die Melaminderivate der Formel IV erst bei der Verdünnung mit Wasser und somit der abschließenden Formulierung der Tinte zuzusetzen.

Ein weiterer Gegenstand der vorliegenden Erfindung ist die Verwendung der erfindungsgemäßen Farbmittelzubereitungen zur Herstellung von Aufzeichnungsflüssigkeiten, insbesondere zur Herstellung von Tinten für den Ink-Jet oder Tintenstrahldruck, sowie ein Verfahren zur Herstellung von Aufzeichnungsflüssigkeiten aus den erfindungsgemäßen Farbmittelzubereitungen. Weitere Aspekte der vorliegenden Erfindung sind ein Verfahren zur Herstellung der erfindungsgemäßen Aufzeichnungsflüssigkeiten unter Verwendung der erfindungsgemäßen Farbmittelzubereitungen sowie die so hergestellten Aufzeichnungsflüssigkeiten.

Die Herstellung der erfindungsgemäßen Aufzeichnungsflüssigkeiten aus den erfindungsgemäßen Farbmittelzubereitungen erfolgt durch Verdünnen der erfindungsgemäßen Farbmittelzubereitungen mit Wasser. Dabei kann man neben Wasser auch noch weitere Lösemittel und Hilfsstoffe zugeben, wobei die Lösemittel und Hilfsstoffe wie oben stehend definiert sind.

Ganz besonders vorteilhaft eignen sich die erfindungsgemäßen Farbmittelzubereitungen bzw. daraus hergestellte erfindungsgemäße Aufzeichnungsflüssigkeiten zur Erstellung von Ink-Jet-Tintensets. Der Gehalt der einzelnen Aufzeichnungsflüssigkeiten an den jeweiligen Farbmitteln ist dabei an die jeweiligen Erfordernisse (z.B. Trichromie) anzupassen und ist durch wenige Druckversuche und einfache Optimierungen leicht zu ermitteln.

Ein weiterer Aspekt der vorliegenden Erfindung ist ein Verfahren zum Bedrucken von flächigen oder dreidimensionalen Substraten nach dem Ink-Jet-Verfahren unter Verwendung der erfindungsgemäßen Aufzeichnungsflüssigkeiten. Dazu druckt man eine oder mehrere erfindungsgemäßen Aufzeichnungsflüssigkeiten, insbesondere Tinten auf das Substrat auf.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble-Jet-Verfahren) Druck auf das Tintensystem ausgeübt und so die Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Aufzeichnungsflüssigkeiten für das Continuous Ink-Jet-Verfahren und für das Verfahren mittels eines piezoelektrischen Kristalls.

Üblicherweise werden die nach dem Ink-Jet-Verfahren bedruckten Flächen mit Wärme behandelt, um die Drucke zu fixieren und das Dispergierbindemittelsystem zu vernetzen. Die Wärmeeinwirkung kann beispielsweise mit Wasserdampf oder Heißluft durchgeführt werden. Ein üblicher Temperaturbereich ist 150 bis 180°C für 5 bis 8 Minuten. Bei Heißluft empfiehlt sich, das bedruckte Textil bei 180 bis 200 °C während etwa einer Minute zu behandeln.

In einer weiteren Ausführungsform der vorliegenden Erfindung nimmt man thermisch oder durch aktinische Strahlung, vorzugsweise im UV-Bereich, initiierte Vernetzung vor.

Als Substratmaterialien sind geeignet:
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

Die erfindungsgemäßen Tinten zeichnen sich durch vorteilhafte Anwendungseigenschaften aus, vor allem gutem Anschreibverhalten und gutem Dauerschreibverhalten (Kogation) sowie gutem Trocknungsverhalten. Sie ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Textil. Besonders vorteilhaft ist, dass sich das erfindungsgemäße Verfahren zum Bedrucken von Textilien besonders schnell und mit hohem Durchsatz pro Zeiteinheit durchführen lässt. Außerdem wurde gefunden, dass Fixierung der Bedruckung auch nach mehreren Wäschen hervorragend ist. Desgleichen ist die Fixierung bei auch bei solchen Substraten ausgezeichnet, die einmal oder mehrfach gebogen, geknickt oder gefaltet werden.

Eine weitere Ausführungsform der vorliegenden Erfindung sind Substrate, insbesondere textile Substrate, die nach einem der oben genannten erfindungsgemäßen Verfahren bedruckt wurden und sich durch besonders scharf gedruckte Bilder oder Zeichnungen mit ausgezeichneter Fixierung auszeichnen.

Die Erfindung wird durch Arbeitsbeispiele erläutert. Wenn nicht anders angegeben, wurden die verwendeten Lösemittel nach Standardmethoden getrocknet, siehe beispielsweise Autorenkollektiv Organikum, 3. Nachdruck der 15. Auflage, VEB Verlag der Wissenschaften, Leipzig 1984, Kapitel F: Reagenzienanhang (Seite 782 - 809). Stickstoff wurde zum Trocknen über je einen Trockenturm mit CaCl₂ und Blaugel geleitet.

### 1. Synthesebeispiele

### 1.1. Herstellung eines hyperverzweigten Polyisocyanats mit einer mittleren NCO-Funktionalität von 7

In ein Reaktionsgefäß, ausgestattet mit Rührer, Tropftrichter, Innenthermometer und Gaseinleitrohr wurden 1000 g Isophorondiisocyanat unter Begasung mit trockenem Stickstoff vorgelegt und innerhalb 1 min 300g Trimethylolpropan, gelöst in 1300 g trockenem Butylacetat, unter gutem Rühren zugegeben. Nach Zudosierung von 0,2 g Dibutylzinn-dilaurat wurde die Reaktionsmischung auf 50°C erwärmt, bei dieser Temperatur gerührt und die Abnahme des NCO-Gehaltes titrimetrisch nach DIN 53 185 verfolgt. Bei Erreichen eines NCO-Gehaltes von 7,3 Gew.-% wies das Reaktionsprodukt eine mittlere Funktionalität bezüglich NCO von 2 und bezüglich OH von 1 auf. Dem Additionsprodukt wurden nun 650 g BASONAT® HI 100, gelöst in 650 g trockenem Butylacetat, zugesetzt, die Mischung auf 70°C erwärmt und 3 h bei dieser Temperatur gerührt. Das Endprodukt wies einen NCO-Gehalt von 5,9 Gew.-% und eine Viskosität von 920 mPa·s, gemessen bei 25°C, auf. Die mittlere Molmasse des Polyisocyanats betrug 2609 g/mol, die mittlere Funktionalität bezogen auf NCO-Gruppen betrug etwa 7.

### 1.2.Umsetzung des hyperverzweigten Polyisocyanats aus 1.1. mit Pluriol® A 2000 E und weiteren Komponenten

In einem 500-ml-Vierhalskolben mit Rührer, Thermometer und Rückflusskühler wurden 100 ml Tetrahydrofuran, 57,1 g (10,6 mmol) hochverzweigtes Polyisocyanat aus 1.1. und 99,5 g (53,3 mmol) Pluriol® A 2000 E vorgelegt. Der Isocyanatgehalt dieser Mischung lag bei 1,20 %. Unter Rühren wurde anschließend Zulauf 1 (s.u.) zugegeben. Nach Zugabe von 2 Tropfen (= 50 mg) Dibutylzinn-dilaurat wurde der Ansatz auf 80 °C erwärmt und bis zur vollständigen Reaktion der Isocyanatgruppen bei dieser Temperatur gehalten. Anschließend wurden 200 ml destilliertes Wasser zugegeben und das Tetrahydrofuran (THF) bei reduziertem Druck (150 mbar) abdestilliert.

Für Zulauf 1 wurde folgende Substanz eingesetzt:
131, 76 g (22, 4 mmol) Polyvinylpyrrolidon, kommerziell erhältlich als Luviskol® K 17 der BASF Aktiengesellschaft, gelöst in 50 ml THF

### 1.3.Das Beispiel 1.2. wurde wiederholt. Für Zulauf 1 wurde folgende Substanz eingesetzt:

6,04 g (22,4 mmol) Stearylamin, gelöst in 50 ml THF

### 1.4. Synthese des hyperverzweigten Polyurethans 1.4:

In einem Reaktionsgefäß, versehen mit Rührer, Innenthermometer, Tropftrichter und Gaseinleitrohr, wurden 1000 g Isophorondiisocyanat (IPDI) unter Stickstoffbedeckung bei 23°C vorgelegt und innerhalb 1 min 300g Trimethylolpropan (TMP), gelöst in 1300 g wasserfreiem 2-Butanon, unter gutem Rühren zugegeben. Nach Zudosierung von 0,2 g Dibutylzinn-dilaurat wurde die Reaktionsmischung auf 50°C erwärmt, bei dieser Temperatur gerührt und die Abnahme des NCO-Gehaltes titrimetrisch gemäß DIN 53 185 verfolgt. Bei Erreichen eines NCO-Gehaltes von 5,4 Gew.-% wurden 147 g 2,4-Toluylendiisocyanat (TDI) zugesetzt, die Mischung auf 60°C erwärmt und 1 h bei dieser Temperatur gerührt. Nach beendeter Reaktion wies die Lösung einen NCO-Gehalt von 5,7 Gew.-% auf. Die berechnete mittlere Molmasse des Polyisocyanats betrug 2420 g/ mol, die mittlere Funktionalität betrug 5,9 NCO-Gruppen pro Molekül. Anschließend wurde das 2-Butanon bei 50 mbar und 50 bis 70°C abdestilliert.

### 1.5. Synthese des hyperverzweigten Polyurethan-Ammoniumsalzes 1.5.

In ein Reaktionsgefäß, versehen mit Rührer und Tropftrichter, wurden 150g des Polyisocyanats aus Beispiel 1.4 bei 23°C mit 150g wasserfreiem Aceton versetzt. Anschließend wurde unter heftigem Rühren eine Lösung aus 18,8g β-Alanin, 100g destilliertem Wasser, 8,4g festem Natriumhydroxid und 50 g Aceton innerhalb von 30 s zugegeben und die Reaktionsmischung 30 min bei Raumtemperatur gerührt. Anschließend wurde das Produkt am Rotationsverdampfer bei vermindertem Druck von Aceton und 2-Butanon befreit, in 1500 ml Wasser gelöst und durch Zugabe eines Überschusses von 0,1n wässriger Salzsäure ausgefällt. Nach dem Absaugen und einmaligem Waschen mit 200 ml Wasser wurde das Produkt im Vakuum bei 50°C getrocknet. Dem trockenen Säuregruppen enthaltendem Polyurethan wurden anschließend 29g 25%ige wässrige Ammoniaklösung zusetzt und mit Wasser so verdünnt, dass eine 50%ige wässrige Lösung des Polyurethan-Ammoniumsalzes 1.5. resultierte.

### 1.6. Synthese des hyperverzweigten Polyurethan-Ammoniumsalzes 1.6.:

In ein Reaktionsgefäß, versehen mit Rührer, Tropftrichter, Innenthermometer und Gaseinleitrohr wurden unter Stickstoffbedeckung 150g des Polyisocyanats aus Beispiel 1.4 bei 23°C mit 8 g Hydroxyethylacrylat und 0,05 g Dibutylzinn-dilaurat versetzt, auf 60°C erwärmt und 3 h bei dieser Temperatur gerührt. Anschließend wurde die Mischung auf 23°C abgekühlt und mit 150g wasserfreiem Aceton versetzt. Dann wurde unter heftigem Rühren eine Lösung aus 12,3g β-Alanin, 100g destilliertem Wasser, 5,5g festem Natriumhydroxid und 50g Aceton innerhalb von 30 s zugegeben und die Reaktionsmischung 30 min bei Raumtemperatur gerührt. Anschließend wurde das Produkt am Rotationsverdampfer bei vermindertem Druck von Aceton und 2-Butanon befreit, in 1500 ml Wasser gelöst und durch Zugabe eines Überschusses von 0,1n wässriger Salzsäure ausgefällt. Nach dem Absaugen und einmaligem Waschen mit 200 ml Wasser wurde das Produkt im Vakuum bei 50°C getrocknet. Dem trockenen Säuregruppen und acrylische Doppelbindungen enthaltendem Polyurethan wurden anschließend 18g 25Gew.-% wässrige Ammoniaklösung zusetzt und mit Wasser so verdünnt, dass eine 20 Gew.-% wässrige Lösung des Polyurethan-Ammoniumsalzes 1.6 resultierte.

### 1.7. Synthese des hyperverzweigten Polyurethan-Ammoniumsalzes 1.7:

In ein Reaktionsgefäß, versehen mit Rührer, Tropftrichter, Innenthermometer und Gaseinleitrohr wurden unter Stickstoffbedeckung 150g des Polyisocyanats aus Beispiel 1.4 bei 23°C vorgelegt und mit 150 ml wasserfreiem Aceton versetzt. Dann wurde bei Raumtemperatur eine Lösung von 8,9 g Dibutylamin und 10 g Aceton langsam zugegeben, so dass 30 °C nicht überschritten wurden. Anschließend wurde der Mischung unter heftigem Rühren eine Lösung aus 12,3g β-Alanin, 100g destilliertem Wasser, 5,5g festem Natriumhydroxid und 50g Aceton innerhalb von 30 s zugegeben und die Reaktionsmischung 30 min bei Raumtemperatur gerührt. Das Produkt wurde dann am Rotationsverdampfer bei vermindertem Druck von Aceton und 2-Butanon befreit, in 1500 ml Wasser gelöst und durch Zugabe eines Überschusses von 0,1n wässriger Salzsäure ausgefällt. Nach dem Absaugen und einmaligem Waschen mit 200 ml Wasser wurde das Produkt im Vakuum bei 50°C getrocknet. Dem trockenen Säuregruppen enthaltendem Polyurethan wurden anschließend 19g 25 Gew.-% wässrige Ammnoniaklösung zusetzt und mit Wasser so verdünnt, dass eine 20 Gew.-% wässrige Lösung des Polyurethan-Ammoniumsalzes 1.7. resultierte.

### 1.8.Synthese des hyperverzweigten Polyurethan-Ammoniumsalzes 1.8.:

In einem Reaktionsgefäß, versehen mit Rührer, Innenthermometer, Tropftrichter und Gaseinleitrohr, wurden 672 g Hexamethylendiisocyanat (HDI) und 672 g wasserfreies Dimethylacetamid (DMAc) bei 23°C unter Stickstoffbedeckung vorgelegt. Anschließend wurde innerhalb von 10 min die Lösung aus 268 g Trimethylolpropan, 268 g Dimethylolpropionsäure und 1072 g wasserfreiem DMAc, unter gutem Rühren zugegeben. Dann wurde die Reaktionsmischung auf 70°C erwärmt, bei dieser Temperatur gerührt und die Abnahme des NCO-Gehaltes titrimetrisch gemäß DIN 53 185 verfolgt. Bei Erreichen eines NCO-Gehaltes der Mischung von 2,0 Gew.-% wurden 400 g Pluriol® E 400 (difunktionelles Polyethylenglykol, mittlere Molmasse 400 g/mol, BASF Aktiengesellschaft) zugesetzt und 3 h bei 60°C nachgerührt. Während dieser Zeit sank der NCO-Gehalt der Mischung auf 0%. Das Produkt wurde anschließend im Dünnschichtverdampfer bei 140°C Manteltemperatur bei einem Druck von 1,4 mbar von Lösungsmittel befreit.

Das farblose, hochviskose Produkt wurde mit 25 Gew.-% wässriger Ammoniaklösung auf einen pH-Wert von 8 eingestellt und anschließend mit Wasser zu einer 50 gew.-%igen Lösung verdünnt.

### 2. Prüfung der hyperverzweigten Polyurethane auf dispergierende Eigenschaften

### Allgemeines Vorgehen

In einer 50-ml-Glasflasche wurden folgende Komponenten zusammengegeben:

| | |
|---|---|
| 2,25 g | hyperverzweigtes Polyurethan |
| 1,13 g | 1,2-Propylenglykol |
| 0,11 g | Proxel® XL2 (Biocid) |
| 0,02 g | Etingal® A (Entschäumer) |
| 15,83 g | Wasser |

Die Flaschen wurden verschlossen und mit der Hand geschüttelt, bis alle Inhaltsstoffe homogen verteilt bzw. gelöst waren. Anschließend wurden 22,5 g Glaskugeln vom Durchmesser 250 - 420 µm und 2,25 g Farbpigment (Hostaperm® Rosa E-WD) zugegeben. Die Flaschen wurden wieder fest verschlossen, und die Mischungen 2 Stunden im Skandex-Mischer (Typ BAS 20) dispergiert. Anschließend wurde von der Dispersion über Lichtstreuung im Malvern Zetasizer (Typ DTS 5100) die Teilchengröße bestimmt.

### Ergebnisse:

| hyperverzweigtes Polyurethan | Teilchengröße [nm] | Polydispersität |
|---|---|---|
| 1.2. | 295 | 0,53 |
| 1.3. | 276 | 0,11 |
| 1.5. | 213 | 0,12 |
| 1.6. | 226 | 0,20 |
| 1.7. | 269 | 0,07 |
| 1.8. | 236 | 0,17 |
| V 1 | 542 | 0,22 |
| V 2 | 1151 | 0,67 |
| V 3 | 593 | 0,58 |

Erwünscht sind möglichst geringe Polydispersität bei möglichst geringer Teilchengröße.

### Vergleichsbeispiele:

V1 Polyurethan hergestellt nach Beispiel C in WO 91/14515, Seite 35, statistisch, keine hyperverzweigten Strukturen
V2 Polyurethan hergestellt nach US 5,368,944, Beispiel 1.1.
V3 Polyurethan hergestellt nach US 5,368,944, Beispiel 2

### 3. Herstellung und Prüfung von in situ hergestellten Dispergierbindemitteln aus hyperverzweigten Polyurethanen und Melaminharz

In einer 50-ml-Glasflasche werden folgende Komponenten zusammengegeben:

| | |
|---|---|
| 2,25 g | hyperverzweigtes Polyurethan (100 %ig) |
| 1,13 g | 1,2-Propylenglykol |
| 0,11 g | Proxel® XL2 (Biocid) |
| 0,02 g | Etingal® A |
| 15,75 g | Wasser |
| 0,99 g | Cymel® 327 (Melaminderivat) |

Die Flaschen wurden verschlossen und mit der Hand geschüttelt, bis alle Inhaltsstoffe homogen verteilt bzw. gelöst waren. Anschließend wurden 22,5 g Glaskugeln vom Durchmesser 250 - 420 µm und 2,25 g Farbpigment (P:R.122) zugegeben. Die Flaschen wurden wieder fest verschlossen, und es wurde 2x2 Stunden im Skandex-Mischer (Typ BAS 20) dispergiert. Anschließend wurde die Größe der Teilchen in der Dispersion über Lichtstreuung im Malvern Zetasizer (Typ DTS 5100) bestimmt.

### Ergebnisse:

| Dispergierbindemittel | Hyperverzweigtes Polyurethan | Teilchengröße [nm] | Polydispersität |
|---|---|---|---|
| 2.1 | 1.5 | 192 | 0,17 |
| (V 2.2) | 1.5 | 170 | 0,28 |
| 2.3 | 1.6 | 212 | 0,10 |
| (V 2.4) | 1.6 | 185 | 0,19 |
| 2.5 | 1.7 | 225 | 0,21 |
| (V 2.6) | 1.7 | 222 | 0,04 |

Bei den Vergleichsversuchen V 2.2, V 2.4 und V 2.6 handelt es sich nicht um Dispergierbindemittel im Sinne der vorliegenden Erfindung, sondern um hyperverzweigte Polyurethane.

In der 2. Spalte sind die betreffenden hyperverzweigten Polyurethane aufgelistet, die entweder als Dispergiermittel per se verwendet wurden (V 2.2, V 2.4 und V 2.6) bzw. auf deren Basis die erfindungsgemäßen Dispergierbindemittel *in situ* hergestellt wurden.

## Patentansprüche

1. Aufzeichnungsflüssigkeiten, enthaltend Wasser, ein oder mehrere feinteilige organische oder anorganische Farbmittel sowie Polyurethane mit hyperverzweigten Strukturen, ausgewählt aus
hyperverzweigten Polyurethanen
und modifizierten hyperverzweigten Polyurethanen.

2. Aufzeichnungsflüssigkeiten nach Anspruch 1, **dadurch gekennzeichnet, dass** es sich um Tinten handelt.

3. Aufzeichnungsflüssigkeiten nach Anspruch 1 oder 2, **dadurch gekennzeichnet, dass** es sich um Tinten für das Ink-Jet-Verfahren handelt.

4. Aufzeichnungsflüssigkeiten nach einem der Ansprüche 1 bis 3, **dadurch gekennzeichnet, dass** sie ein oder mehrere modifizierte hyperverzweigte Polyurethane enthalten, erhältlich durch Umsetzung von einem oder mehreren hyperverzweigten Polyurethanen mit einem oder mehreren Polymeren der allgemeinen Formel I
U-(M)_{y}-T I
wobei die Variablen wie folgt definiert sind:
U ausgewählt aus Wasserstoff, C₁-C₁₈-Alkyl, C₇-C₁₃-Aralkyl, C₆-C₁₄-Aryl, oder einem Rest aus einem Radikalstartermolekül,
M gleiche oder verschiedene Monomereinheiten;
y ist eine ganze Zahl von 10 bis 100.000;
T funktionelle Gruppen, die mit den NCO-Gruppen oder OH-Gruppen von hyperverzweigten Polyurethanen zu modifizierten hyperverzweigten Polyurethanen reagieren.

5. Aufzeichnungsflüssigkeiten nach den Ansprüchen 1 bis 4, **dadurch gekennzeichnet, dass** das modifizierte hyperverzweigte Polyurethan erhältlich ist durch Umsetzung eines oder mehrerer hyperverzweigter Polyurethane mit einem oder mehreren Polyetherderivaten, ausgewählt aus
Polyalkylenglykolderivaten der allgemeinen Formel II 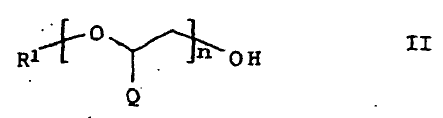 und Poly-THF-Derivaten der allgemeinen Formel III 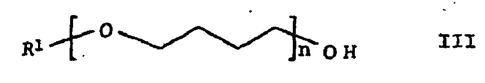 in denen jeweils
R¹ ausgewählt ist aus Wasserstoff oder C₁-C₄₀-Alkyl, das mit einer oder mehreren Hydroxylgruppen substituiert sein kann mit der Maßgabe, dass die Zahl der Hydroxylgruppen maximal so groß ist wie die Zahl der C-Atome im betreffenden C₁-C₄₀-Alkyl, oder C₇-C₁₃-Aralkyl oder C₆-C₁₄-Aryl,
Q gleich oder verschieden und ausgewählt aus Wasserstoff oder Methyl, und
n eine ganze Zahl von 2 bis 500 bedeutet, bevorzugt 2 bis 200,
sowie Copolymeren aus Ethylenoxid und Propylenoxid oder Butylenoxid oder Terpolymeren aus Ethylenoxid und Propylenoxid und Butylenoxid, die verzweigt sein können.

6. Aufzeichnungsflüssigkeiten nach einem der Ansprüche 1 bis 5, **dadurch gekennzeichnet, dass** das modifizierte hyperverzweigte Polyurethan erhältlich ist durch Umsetzung eines Unterschusses, bezogen auf die NCO-Gruppen des hyperverzweigten Polyurethans, an Polymer der Formel I, und dass die nicht umgesetzten NCO-Gruppen anschließend zu pigmentaffinen Gruppen umsetzt werden.

7. Aufzeichnungsflüssigkeiten nach einem der Ansprüche 1 bis 6, **dadurch gekennzeichnet, dass** man die NCO-Gruppen mit aliphatischen oder aromatischen Alkoholen, Thiolen, Aminen, Carbonsäurederivaten, Sulfonsäurederivaten oder Harnstoffderivaten zu pigmentaffinen Gruppen umsetzt.

8. Aufzeichnungsflüssigkeiten nach einem der Ansprüche 1 bis 7, **dadurch gekennzeichnet, dass** sie zusätzlich ein oder mehrere Melaminderivate der allgemeinen Formel IV 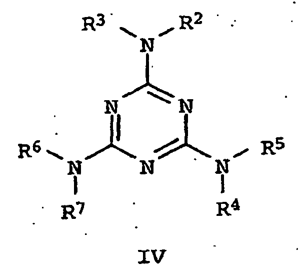 enthalten, wobei die Variablen wie folgt definiert sind:
R² bis R⁷ gleich oder verschieden und ausgewählt aus Wasserstoff oder CH₂-OR⁸ oder CH(OR⁸)₂ oder CH₂-N(R⁸)₂
wobei R⁸ gleich oder verschieden sind und ausgewählt aus
Wasserstoff.
C₁-C₁₂-Alkyl, verzweigt oder unverzweigt;
Alkoxyalkylen ausgewählt aus (-CH₂-CH₂-O)ₘ-H, (-CHCH₃-CH₂-O)ₘ-H, (-CH₂-CHCH₃-O)ₘ-H, (-CH₂-CH₂-CH₂-CH₂-O)ₘ-H, wobei
m eine ganze Zahl von 1 bis 20 ist.

9. Aufzeichnungsflüssigkeiten nach Anspruch 8, **dadurch gekennzeichnet, dass** R² und R³ in Formel IV gleich Wasserstoff gewählt werden.

10. Aufzeichnungsflüssigkeiten nach Anspruch 8 oder 9, **dadurch gekennzeichnet, dass** R⁴ in Formel IV gleich CH₂OH gewählt wird.

11. Verfahren zur Herstellung von Aufzeichnungsflüssigkeiten nach Anspruch 1 bis 10, **dadurch gekennzeichnet, dass** man ein oder mehrere hyperverzweigte Polyurethane oder ein oder mehrere modifizierte hyperverzweigte Polyurethane mit Wasser, einem oder mehreren feinteiligen anorganischen oder organischen Farbmitteln, gegebenenfalls einem Melaminderivat der allgemeinen Formel IV und gegebenenfalls Hilfsstoffen innig vermischt.

12. Verfahren zum Bedrucken flächiger oder dreidimensionaler Substrate nach dem Ink-Jet-Verfahren unter Verwendung von Aufzeichnungsflüssigkeiten nach einem der Ansprüche 1 bis 10.

13. Flächige und dreidimensionale Substrate, erhältlich nach einem Verfahren nach Anspruch 12.

## Claims

1. Recording fluids comprising water, one or more finely divided organic or inorganic colorants and also polyurethanes having hyperbranched structures selected from
hyperbranched polyurethanes
and modified hyperbranched polyurethanes.

2. Recording fluids as claimed in claim 1, being inks.

3. Recording fluids as claimed in claim 1 or 2, being inks for the ink jet process.

4. Recording fluids as claimed in any of claims 1 to 3, comprising one or more modified hyperbranched polyurethanes obtainable by reaction of one or more hyperbranched polyurethanes with one or more polymers of the general formula I
U-(M)_{y}-T I
where
U is selected from hydrogen, C₁-C₁₈-alkyl, C₇-C₁₃-aralkyl, C₆-C₁₄-aryl and a residue from a free-radical initiator molecule,
each M represents the same or different monomer units;
y is an integer from 10 to 100 000;
T represents functional groups which react with the NCO groups or OH groups of hyperbranched polyurethanes to form modified hyperbranched polyurethanes.

5. Recording fluids as claimed in any of claims 1 to 4, wherefor the modified hyperbranched polyurethane is obtainable by reaction of one or more hyperbranched polyurethanes with one or more polyether derivatives selected from
polyalkylene glycol derivatives of the general formula II 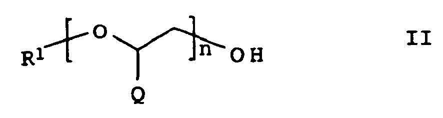 and polytetrahydrofuran derivatives of the general formula III 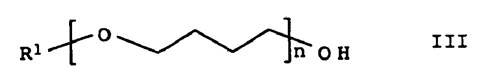 in each of which
R¹ is selected from the group consisting of hydrogen, C₁-C₄₀-alkyl which may be substituted by one or more hydroxyl groups with the proviso that the number of hydroxyl groups is not more than the number of carbon atoms in the C₁-C₄₀-alkyl in question, C₇-C₁₃-aralkyl and C₆-C₁₄-aryl,
each Q is the same or different and is selected from the group consisting of hydrogen and methyl, and
n is an integer from 2 to 500 and preferably from 2 to 200,
and also copolymers of ethylene oxide and propylene oxide or butylene oxide or terpolymers of ethylene oxide and propylene oxide and butylene oxide, which may each be branched.

6. Recording fluids as claimed in any of claims 1 to 5, wherefor the modified hyperbranched polyurethane is obtainable by reaction of a deficiency, based on the NCO groups of the hyperbranched polyurethane, of polymer of the formula I and the unconverted NCO groups are subsequently converted into groups having affinity for pigment.

7. Recording fluids as claimed in any of claims 1 to 6, wherefor the NCO groups are reacted with aliphatic or aromatic alcohols, thiols, amines, carboxylic acid derivatives, sulfonic acid derivatives or urea derivatives to form groups having affinity for pigment.

8. Recording fluids as claimed in any of claims 1 to 7, further comprising one or more melamine derivatives of the general formula IV 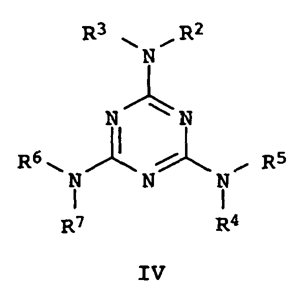 where
R² to R⁷ are the same or different and are each selected from the group consisting of hydrogen, CH₂-OR⁸, CH(OR⁸)₂ and CH₂-N(R⁸)₂,
where each R⁸ is the same or different and selected from
hydrogen,
C₁-C₁₂-alkyl, branched or unbranched;
alkoxyalkylene selected from (-CH₂-CH₂-O)ₘ-H,
(-CHCH₃-CH₂-O)ₘ-H, (-CH₂-CHCH₃-O)ₘ-H, (-CH₂-CH₂-CH₂-CH₂-O)ₘ-H,
where
m is an integer from 1 to 20.

9. Recording fluids as claimed in claim 8, wherein R² and R³ are both hydrogen in the formula IV.

10. Recording fluids as claimed in claim 8 or 9, wherein R⁴ is CH₂OH in the formula IV.

11. A process for preparing recording fluids as claimed in any of claims 1 to 10, which comprises intimately mixing one or more hyperbranched polyurethanes or one or more modified hyperbranched polyurethanes with water, one or more finely divided inorganic or organic colorants, if appropriate a melamine derivative of the general formula IV and if appropriate assistants.

12. A process for printing sheetlike or three-dimensional substrates by the ink jet process using recording fluids as set forth in any of claims 1 to 10.

13. Sheetlike and three-dimensional substrates obtainable by a process as claimed in claim 12.

## Revendications

1. Liquides d'impression, contenant de l'eau, un ou plusieurs colorants organiques ou inorganiques finement divisés ainsi que des polyuréthannes à structures hyperramifiées choisis parmi
des polyuréthannes hyperramifiés
et des polyuréthannes hyperramifiés modifiés.

2. Liquides d'impression suivant la revendication 1, **caractérisés en ce qu'**il s'agit d'encres.

3. Liquides d'impression suivant la revendication 1 ou 2, **caractérisés en ce qu'**il s'agit d'encres pour un procédé à jet d'encre.

4. Liquides d'impression suivant l'une des revendications 1 à 3, **caractérisés en ce qu'**ils contiennent un ou plusieurs polyuréthannes hyperrramifiés modifiés, que l'on peut obtenir par réaction d'un ou de plusieurs polyuréthannes hyperramifiés avec un ou plusieurs polymères de la formule générale I :
U-(M)_{y}-T I
dans laquelle les variables sont définies de la manière suivante :
U est choisi parmi de l'hydrogène ou un groupe alkyle en C₁-C₁₈, aralkyle en C₇-C₁₃, aryle en C₆-C₁₄, ou un radical à base d'une molécule d'amorçage radicalaire,
M représente des unités monomères identiques ou différentes,
y est un nombre entier de 10 à 100.000,
T représente des groupes fonctionnels qui réagissent avec les groupes NCO ou OH de polyuréthannes hyperramifiés pour donner des polyuréthannes hyperramifiés modifiés.

5. Liquides d'impression suivant les revendications 1 à 4, **caractérisés en ce que** le polyuréthanne hyperramifié modifié peut être obtenu par réaction d'un ou de plusieurs polyuréthannes hyperramifiés avec un ou plusieurs dérivés de polyéthers choisis parmi
des dérivés de polyalkylèneglycol de la formule générale II : 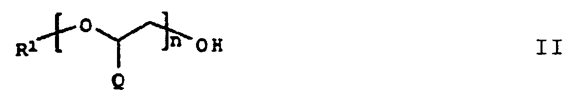 et des dérivés de poly-THF de la formule générale III : 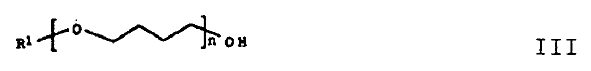
dans lesquelles chaque fois
R¹ est choisi parmi de l'hydrogène ou un groupe alkyle en C₁-C₄₀ qui peut être substitué par un ou plusieurs groupes hydroxyle à la condition que le nombre de groupes hydroxyle soit au maximum aussi élevé que le nombre des atomes de C dans l'alkyle en C₁-C₄₀ concerné, ou aralkyle en C₇-C₁₃ ou aryle en C₆-C₁₄,
Q est identique ou différent et est choisi parmi de l'hydrogène ou du méthyle, et
n est un nombre entier de 2 à 500, de préférence de 2 à 200,
ainsi que des copolymères d'oxyde d'éthylène et d'oxyde de propylène ou d'oxyde de butylène ou des terpolymères d'oxyde d'éthylène et d'oxyde de propylène et d'oxyde de butylène qui peuvent être ramifiés.

6. Liquides d'impression suivant l'une des revendications 1 à 5, **caractérisés en ce que** le polyuréthanne hyperramifié modifié peut être obtenu par réaction d'une quantité insuffisante, par rapport aux groupes NCO du polyuréthanne hyperramifié, d'un polymère de la formule I et **en ce que** les groupes NCO n'ayant pas réagi sont ensuite amenés à réagir pour former des groupes ayant une affinité vis-à-vis des pigments.

7. Liquides d'impression suivant l'une des revendications 1 à 6, **caractérisés en ce qu'**on fait réagir les groupes NCO avec des alcools aliphatiques ou aromatiques, thiols, amines, dérivés d'acide carboxylique, dérivés d'acide sulfonique ou dérivés d'urée pour former des groupes ayant une affinité vis-à-vis des pigments.

8. Liquides d'impression suivant l'une des revendications 1 à 7, **caractérisés en ce qu'**ils contiennent en supplément un ou plusieurs dérivés de mélamine de la formule générale IV : 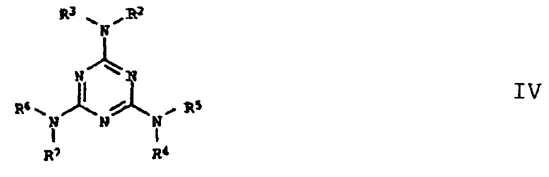 dans laquelle les variables sont définies de la manière suivante :
R² à R⁷ sont identiques ou différents et choisis parmi de l'hydrogène ou CH₂-OR⁸ ou CH(OR⁸)₂ ou CH₂-N(R⁸)₂,
les R⁸ étant identiques ou différents et choisis parmi
de l'hydrogène,
un alkyle en C₁-C₁₂, ramifié ou non ramifié,
un alcoxyalkylène choisi parmi (-CH₂-CH₂-O)ₘ-H,
(-CHCH₃-CH₂-O)ₘ-H, (-CH₂-CHCH₃-O)ₘ-H,
(-CH₂-CH₂-CH₂-CH₂-O)ₘ-H,
m étant un nombre entier de 1 à 20.

9. Liquides d'impression suivant la revendication 8, **caractérisés en ce que** R² et R³ sont, dans la formule IV, choisis identiques à de l'hydrogène.

10. Liquides d'impression suivant la revendication 8 ou 9, **caractérisés en ce que** dans la formule IV, R⁴ est choisi identique à CH₂OH.

11. Procédé de préparation de liquides d'impression suivant les revendications 1 à 10, **caractérisé en ce qu'**on mélange intimement un ou plusieurs polyuréthannes hyperramifiés ou un ou plusieurs polyuréthannes hyperramifiés modifiés avec de l'eau, un ou plusieurs colorants inorganiques ou organiques finement divisés, éventuellement un dérivé de mélamine de la formule générale IV et éventuellement des adjuvants.

12. Procédé d'impression de substrats plats ou tridimensionnels selon le procédé à jet d'encre, par utilisation de liquides d'impression suivant l'une des revendications 1 à 10.

13. Substrats plats et tridimensionnels, que l'on peut obtenir selon un procédé suivant la revendication 12.
